(19) Europäisches Patentamt
European Patent Office
Office européen des brevets

(11) **EP 4 130 355 A1**

(12) **EUROPEAN PATENT APPLICATION**
published in accordance with Art. 153(4) EPC

(43) Date of publication:
**08.02.2023 Bulletin 2023/06**

(51) International Patent Classification (IPC):
***D01F 9/08*** (1974.07)

(21) Application number: **21776060.2**

(52) Cooperative Patent Classification (CPC):
**D01F 9/08;** Y02E 20/16; Y02E 20/18

(22) Date of filing: **18.03.2021**

(86) International application number:
**PCT/JP2021/011047**

(87) International publication number:
**WO 2021/193343 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2020 JP 2020052418**

(71) Applicant: **Nippon Fiber Corporation Abiko-City Chiba 270-1162 (JP)**

(72) Inventor: **FUKAZAWA Hiroshi Abiko-city Chiba 2701162 (JP)**

(74) Representative: **Mewburn Ellis LLP Aurora Building Counterslip Bristol BS1 6BX (GB)**

(54) **FIBER AND FIBER MANUFACTURING METHOD**

(57) It is an object of the invention to provide a fiber and a fiber manufacturing method, in which a waste material discharged from integrated coal gasification combined cycle can be utilized more effectively.

The fiber includes a waste material discharged from integrated coal gasification combined cycle (IGCC) as a raw material.

[Fig. 2]

**Description**

TECHNICAL FIELD

The present invention relates to a fiber and a fiber manufacturing method.

BACKGROUND ART

As one mode of thermal power generation using coal as fuel, Integrated coal Gasification Combined Cycle (hereinafter, also described as IGCC) is known. In IGCC, coal gasification gas is used as fuel to drive a gas turbine to obtain electric power, while at the same time, exhaust heat from the gas turbine is recovered to generate steam, and the generated steam is used to drive a steam turbine to obtain electric power.
By using IGCC, power generation can be achieved with higher thermal efficiency than in conventional coal-fired power generation. Specifically, in the case of a commercial IGCC of 1400-degree to 1500-degree class, a thermal efficiency of about 48% to 50% based on the lower heating value can be realized at the sending end. This thermal efficiency is higher than the thermal efficiency of about 40% of conventional supercritical pressure coal-fired power generation (SC coal-fired power generation) and ultra-supercritical pressure coal-fired power generation (USC coal-fired power generation), and is a thermal efficiency equivalent to that of advanced ultra-supercritical pressure coal-fired power generation (A-USC coal-fired power generation) that is currently under development. Furthermore, since IGCC can utilize low-grade coal that could not be used in conventional coal-fired power generation, fuel cost reduction and diversification of fuel procurement sources can be expected.
As described above, IGCC is expected as a highly efficient next-generation power generation method. However, for the waste generated when IGCC is operated, utilization methods thereof have been established only to the extent that the waste is subjected to processing such as pulverization and is utilized as aggregate for cement (see Patent Document 1), and there is still room for further improvement.

CITATION LIST

PATENT DOCUMENT

Patent Document 1: JP 2017-014052 A

DISCLOSURE OF THE INVENTION

PROBLEM TO BE SOLVED BY THE INVENTION

The invention was achieved in view of the above-described problems, and it is an object of the invention to provide a fiber and a fiber manufacturing method, in which a waste material discharged from integrated coal gasification combined cycle can be utilized more effectively.

MEANS FOR SOLVING PROBLEM

In order to solve the above-described problems, a fiber according to the invention includes a waste material discharged from integrated coal gasification combined cycle (IGCC) as a raw material.

EFFECT OF THE INVENTION

According to the invention, a fiber and a fiber manufacturing method, in which a waste material discharged from integrated coal gasification combined cycle can be utilized more effectively, can be provided.

BRIEF DESCRIPTION OF DRAWINGS

Fig. 1 is a diagram illustrating a component composition of a raw material (IGCC waste material) according to Example 1;

Fig. 2 is a diagram illustrating an outline of an electric furnace utilized in Example 1;
Fig. 3 is a table showing the results of melt spinnability of Example 1;
Fig. 4 is a table showing the temperature conditions of Example 1;

Fig. 5 is a graph showing the temperature conditions of Example 1;
Fig. 6 is an XRD pattern of a fiber formed from raw material S1;
Fig. 7 is an enlarged view (micrograph) of the fiber formed from raw material S1;
Fig. 8 is a diagram showing the mixing ratio (%) of a raw material according to Example 2;
Fig. 9 is a diagram showing the component composition of a waste material or the like according to Example 2;
Fig. 10 is a diagram showing the component composition of the raw material according to Example 2;
Fig. 11 is a table showing the results of melt spinnability and the like of the raw material according to Example 2;
Fig. 12 is a table showing the temperature conditions for Example 2; and
Fig. 13 is a graph showing the temperature conditions for Example 2.

BEST MODE(S) FOR CARRYING OUT THE INVENTION

Hereinafter, embodiments of the invention will be described with reference to the drawings. Incidentally, in the following description,

$SiO_2$ may be referred to as component S, and the content of $SiO_2$ may be described as [S].
$Al_2O_3$ may be referred to as component A, and the content of $Al_2O_3$ may be described as [A].
CaO may be referred to as component C, and the content of CaO may be described as [C].

[Embodiment 1]

A fiber according to the present Embodiment 1 uses a waste material discharged from integrated coal gasification combined cycle (IGCC) (hereinafter, also referred to as IGCC waste material. The IGCC waste material includes slag, coal ash, and the like discharged from IGCC) as a raw material. The IGCC waste material as the raw material contains $SiO_2$ and $Al_2O_3$ as main components, the proportion occupied by $Al_2O_3$ in the sum of $SiO_2$ and $Al_2O_3$ is in a specific range, and the IGCC waste material further contains a specific amount of CaO.
The raw material of the fiber according to the present Embodiment 1 is an IGCC waste material, and the total content of $SiO_2$ and $Al_2O_3$ in the raw material is preferably 40% by mass or more and 70% by mass or less. When the sum of [S] and [A] is either less than 40% by mass or more than 70% by mass, the melting temperature of the raw material becomes high or the viscosity of the molten material becomes high, which results in inferior melt spinnability. Incidentally, melt spinning refers to a technique of discharging a molten material obtained by melting a raw material by heat through a hole (through-hole) formed in a spinneret to produce a fibrous form and then cooling and hardening the fibrous form. Furthermore, melt spinnability refers to the ease of manufacturing of a fiber by melt spinning.
With regard to the raw material of the fiber according to the present Embodiment 1, it is preferable that the proportion of $Al_2O_3$ in the sum of $SiO_2$ and $Al_2O_3$ ([A]/([A] + [S])) (mass ratio) is in the range of 0.15 to 0.40. When [A]/([A] + [S]) (mass ratio) is either less than 0.15 or more than 0.40, the melt temperature becomes high or the viscosity of the molten material becomes high, which results in inferior melt spinnability.
With regard to the raw material of the fiber according to the present Embodiment 1, the content of CaO is preferably 5% by mass or more and 30% by mass or less. When the content of CaO is less than 5% by mass, the melting temperature of the fiber becomes high, and therefore, it is not preferable from the viewpoint of energy saving. Furthermore, the content of CaO is more preferably 30% by mass or less.
With regard to the raw material of the fiber according to the present Embodiment 1, when $SiO_2$, $Al_2O_3$, and CaO of the components are blended so as to satisfy the above-mentioned composition conditions, the fiber according to the present Embodiment 1 can be obtained without any restriction on the raw materials. As the raw materials of the fiber according to the present Embodiment 1, it is preferable to use a waste material (IGCC waste material) discharged by integrated coal gasification combined cycle (IGCC), or the like. The reason for this is that since an IGCC waste material includes $SiO_2$ and $Al_2O_3$ as main components, the IGCC waste is suitable for obtaining the fiber according to the present Embodiment 1, and the raw material cost can be suppressed.
Incidentally, it should be noted that the fiber according to the present Embodiment is not precluded from including unavoidable impurities. The main examples of unavoidable impurities include MgO, $Na_2O$, $K_2O$, $TiO_2$, and $CrO_2$.
In the present Embodiment 1, there is no substantial difference between the component ratio (mass ratio) of the raw materials and the component ratio (mass ratio) of the fiber manufactured by melting the raw materials. For this reason, the component ratio of the raw materials can be regarded as the component ratio of the fiber manufactured by melting the raw materials.
The fiber according to the present Embodiment 1 is highly amorphous. For this reason, the fiber has almost no decrease in strength caused by separation at the crystalline phase / non-crystalline phase interface, and a fiber having high strength can be obtained.
Here, the degree of amorphization, which is a measure of amorphousness, is calculated by the following Mathematical Formula (1) based on an X-ray diffraction (XRD) pattern.

$$\text{Degree of amorphization (\%)} = [\text{la}/(\text{la} + \text{lc})] \times 100$$

$$\cdots (1)$$

In the above Formula (1), la and lc are respectively as follows.

la: integrated value of the scattering intensity of the amorphous halo.
lc: integrated value of the scattering intensity of a crystalline peak when the fiber is subjected to X-ray diffraction analysis.

The degree of amorphization of the fiber according to the present Embodiment 1 may vary depending on the composition of the fiber; however, the degree of amorphization usually presents a value of 90% or higher. The degree of amorphization of the fiber even reaches as high as 95% or higher in some cases, and in case where the degree of amorphization is the highest, the fiber is substantially composed only of an amorphous phase. Here, being substantially composed only of an amorphous phase implies that only the amorphous halo is recognized in the X-ray diffraction pattern, and a peak for a crystalline material was not recognized.

Example Series 1

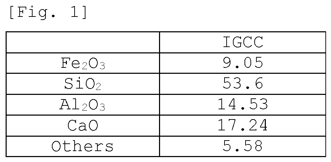

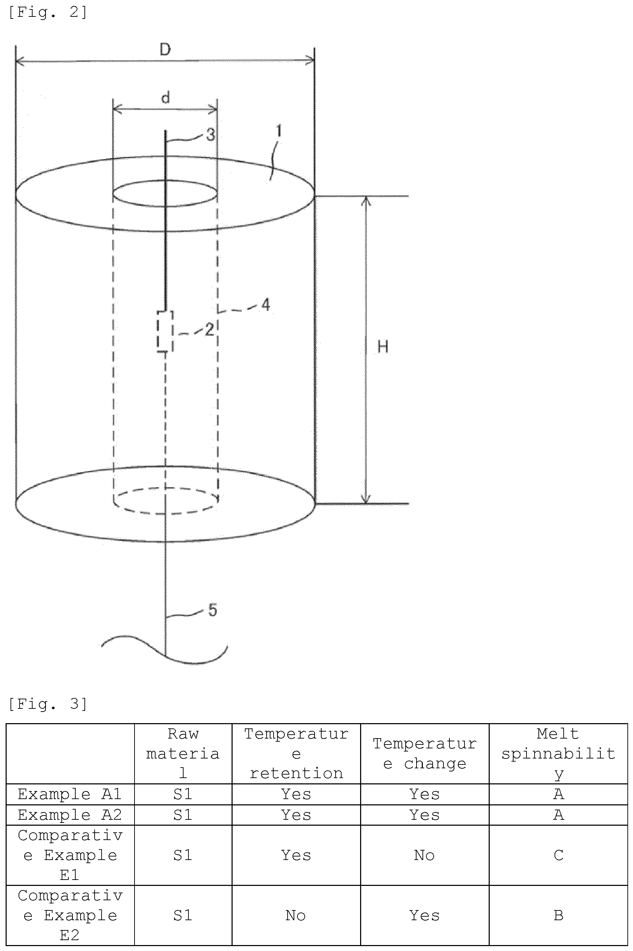

Example Series 1 according to the present Embodiment 1 will be described below.
In the following test examples, an IGCC waste material discharged by integrated coal gasification combined cycle (IGCC) was prepared as a raw material (raw material S1) of the fiber. Regarding the IGCC waste material, a material discharged from a domestic Integrated coal Gasification Combined Cycle was used. The raw material S1 was a 100% IGCC waste material.
Furthermore, in the present Example Series 1, the components of the raw material S1 (IGCC waste material) were analyzed by an X-ray fluorescence analysis method. Fig. 1 shows the component composition of the raw material S1 (IGCC waste material).
Furthermore, an electric furnace was used for manufacturing the raw material S1 into a fiber. An outline of the electric furnace is shown in Fig. 2. The electric furnace 1 is a cylindrical body having a height H of 60 cm and an outer diameter D of 50 cm, in which a through-hole 4 having an inner diameter d of 10 cm is formed at the center. A Tammann tube 2 having an inner diameter of 2.1 cm and a length of 10 cm is suspended by a suspension rod 3 in the through-hole 4. The Tammann tube 2 is charged with 30 g of the raw material (raw material S1). A hole having a diameter of 2 mm is provided at the center of the bottom part of the Tammann tube 2, and when the blend is melted by heating, the molten material flows out through the hole provided in the bottom part of the Tammann tube by gravity. The molten material that has flowed out is exposed to external air to be cooled and is solidified into a fiber. Here, since the molten material that has flowed out is rapidly cooled, the fiber is substantially only amorphous.
In the electric furnace, temperature is raised according to a predetermined temperature raising program, and it has been confirmed in advance that the temperature of the molten material in the Tammann tube 2 follows the temperature profile inside the furnace at a temperature lower by approximately 50 degrees.
The conditions for melt spinning and the results of melt spinning of the raw material S1 in Example Series 1 are shown in Fig. 3.
Incidentally, in the present Example Series 1, melt spinnability was rated as follows.

A: A continuous long thread is formed.
B: The raw material that has been melted and softened comes out through the hole provided in the bottom part of the Tammann tube, and very short fibers are generated; however, a continuous long thread is not formed.
C: Nothing comes out through the hole provided in the bottom part of the Tammann tube, and no thread is formed.

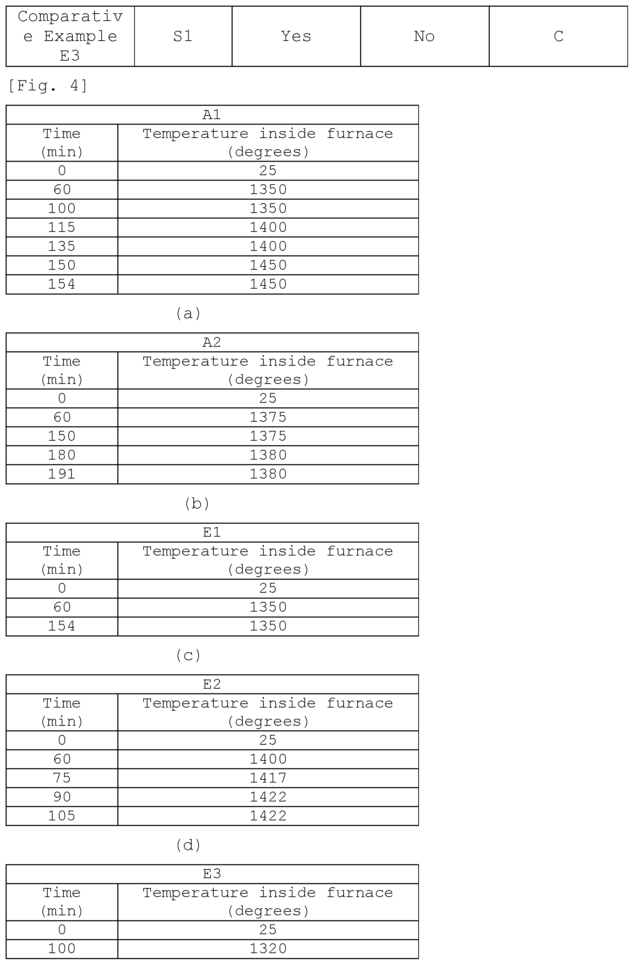

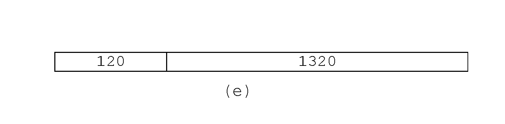

Fig. 3 is a table summarizing the results of the presence or absence of temperature retention (annealing), the presence or absence of temperature change, and melt spinnability for the raw material S1 used in Examples A1 and A2 and Comparative Examples E1 to E3. Fig. 4 is a table showing changes over time in the temperature inside the furnace in Examples A1 and A2 and Comparative Examples E1 to E3.
Fig. 4(a) is a table showing changes over time in the temperature inside the furnace in Example A1.
Fig. 4(b) is a table showing changes over time in the temperature inside the furnace in Example A2.
Fig. 4(c) is a table showing changes over time in the temperature inside the furnace in Comparative Example E1.

Fig. 4(d) is a table showing changes over time in the temperature inside the furnace in Comparative Example E2.

Fig. 4(e) is a table showing changes over time in the temperature inside the furnace in Comparative Example E3.

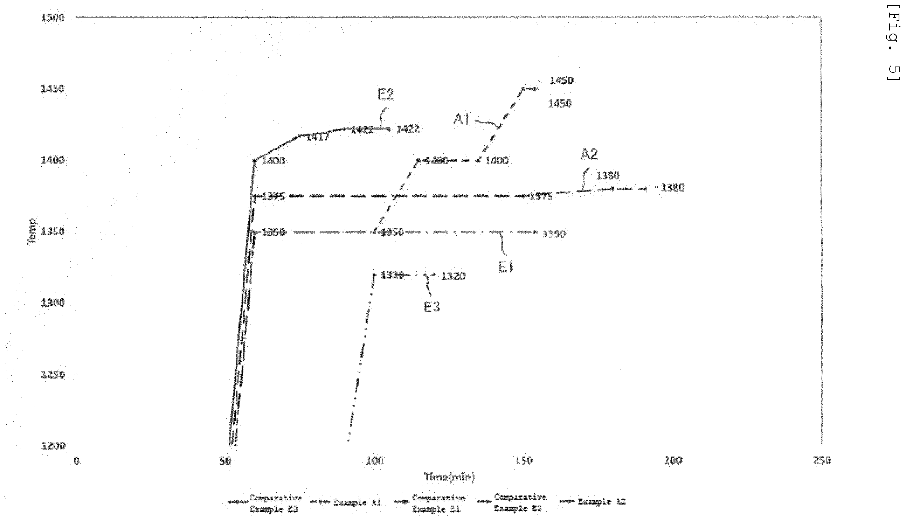

Fig. 5 is a graph obtained by plotting the changes over time in the temperature inside the furnace in Examples A1 and A2 and Comparative Examples E1 to E3 shown in Fig. 4.

(Example A1)

The raw material S1 was placed in the Tammann tube. Next, the temperature inside the furnace was raised to 1350 degrees (the temperature of the raw material S1 was 1300 degrees), and then the raw material S1 was maintained at approximately 1350 degrees for a predetermined time (55 minutes) (temperature retention: Yes). Subsequently, spinnability was checked while changing the temperature inside the furnace (temperature change: Yes), and the raw material S1 formed a fiber (melt spinnability: A).

(Example A2)

The raw material S1 was placed in the Tammann tube. Next, the temperature inside the furnace was raised to 1375 degrees (the temperature of the raw material S1 was 1325 degrees), and then the raw material S1 was maintained at approximately 1375 degrees for a predetermined time (120 minutes) (temperature retention: Yes). Subsequently, spinnability was checked while changing the temperature inside the furnace (temperature change: Yes), and the raw material S1 formed a fiber (melt spinnability: A).

(Comparative Example E1)

The raw material S1 was placed in the Tammann tube, subsequently the temperature inside the furnace was raised to 1350 degrees (the temperature of the raw material S1 was 1300 degrees), and then the raw material S1 was maintained at approximately 1350 degrees for a predetermined time (94 minutes) (temperature retention: Yes). Subsequently, spinnability was checked without changing the temperature inside the furnace (temperature change: No); however, the raw material S1 did not form a fiber (melt spinnability: C) .

(Comparative Example E2)

The raw material S1 was placed in the Tammann tube, subsequently the temperature inside the furnace was raised to 1400 degrees (the temperature of the raw material S1 was 1350 degrees), and then spinnability was checked while changing the temperature inside the furnace (temperature change: Yes). However, the raw material that had been melted and softened came out through the hole provided in the bottom part of the Tammann tube, and very short fibers were generated; however, the raw material S1 did not form a fiber (melt spinnability: B). Furthermore, after the temperature was raised to 1400 degrees, temperature retention of maintaining the temperature for a predetermined time was not carried out (temperature retention: No).

(Comparative Example E3)

The raw material S1 was placed in the Tammann tube, subsequently the temperature inside the furnace was raised to 1320 degrees (the temperature of the raw material S1 was 1270 degrees), and then the raw material S1 was maintained at approximately 1320 degrees for a predetermined time (20 minutes) (temperature retention: Yes). Subsequently, it was checked whether the raw material S1 was spun without changing the temperature inside the furnace (temperature change: No); however, the raw material S1 did not form a fiber (melt spinnability: C).

(Discussion)

From Examples A1 and A2 and Comparative Examples E1 to E3, it was found that a fiber can be manufactured by using an IGCC waste material discharged by integrated coal gasification combined cycle (IGCC) as a raw material.

Regarding the conditions in the case of manufacturing a fiber by using an IGCC waste material as a raw material, it was verified that the following conditions are preferable.

(1) Heating to 1300 degrees or higher.

(2) Maintaining the IGCC waste material at a temperature of 1300 degrees or higher for a predetermined time (preferably 50 minutes or longer, and more preferably 55 minutes or longer) before molding the IGCC waste material into a fiber.

(3) Causing the IGCC waste material to flow out through the formed hole while changing the temperature of the IGCC waste material (in the present Example, temperature is increased).

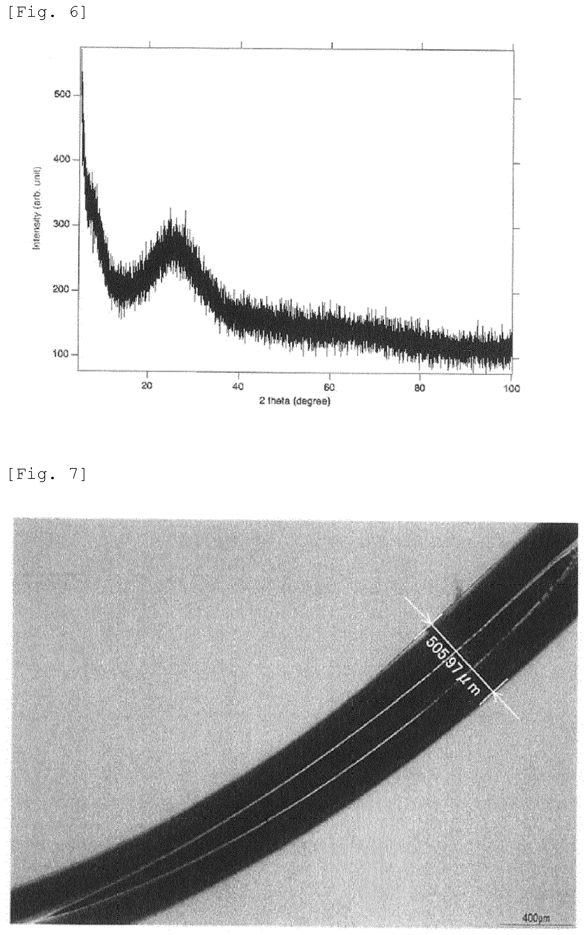

Fig. 6 is an XRD pattern of a fiber formed from the raw material S1. As shown in Fig. 6, only the amorphous halo was recognized in the X-ray diffraction (XRD) pattern of the fiber obtained in the Example A1, and a peak for a crystalline material was not recognized. From this, it was understood that the fiber produced from the IGCC waste material was substantially composed only of an amorphous material.

Furthermore, Fig. 7 is an enlarge view (micrograph) of the fiber formed from the raw material S1 shown in Fig. 6. As shown in Fig. 7, a fiber having an outer diameter of more than 500 $\mu$m could be obtained. This fiber is substantially composed only of an amorphous material as described with reference to Fig. 6. This is speculated to be because, after the IGCC waste material in a molten state has flowed out through the hole provided at the center of the bottom part of the Tammann tube 2, the IGCC waste material is quenched and then becomes amorphous without adopting a regular atomic arrangement. Then, in this Example 1, it was recognized that a fiber having an outer diameter of more than 500 $\mu$m is substantially composed only of an amorphous material. Here, generally, it is conceived that as the outer diameter of the fiber is finer, the rate of cooling is faster. Therefore, it is presumed that as the outer diameter is finer than the outer diameter (505.97 $\mu$m) of the fiber shown in Fig. 7, the fiber is substantially composed only of an amorphous material. More specifically, it is presumed that a fiber having an outer diameter of 500 $\mu$m or less is substantially composed only of an amorphous material.

[Embodiment 2]

A fiber according to the present Embodiment 2 includes a waste material discharged from integrated coal gasification combined cycle (IGCC) as a raw material. Specifically, the fiber according to the present Embodiment 2 includes at least one of basalt and a waste material discharged from a non-IGCC thermal power plant that uses coal as fuel, as a raw material in the waste material discharged from integrated coal gasification combined cycle (IGCC).

In the same way as in Embodiment 1, it is preferable that the total content of $SiO_2$ and $Al_2O_3$ in the raw material of the fiber according to the present Embodiment 2 is 40% by mass or more and 70% by mass or less. Furthermore, with regard to the raw material of the fiber according to the present Embodiment 2, it is preferable that the proportion of $Al_2O_3$ in the sum of $SiO_2$ and $Al_2O_3$ ([A]/([A] + [S])) (mass ratio) is in the range of 0.15 to 0.40. Furthermore, with regard to the raw material of the fiber according to the present Embodiment 2, it is preferable that the content of CaO is 5% by mass or more and 30% by mass or less. Furthermore, similarly to the fiber according to Embodiment 1, it is preferable that the fiber according to the present Embodiment 2 is substantially composed only of an amorphous phase.

Example Series 2

Example Series 2 according to the present Embodiment 2 will be described below.

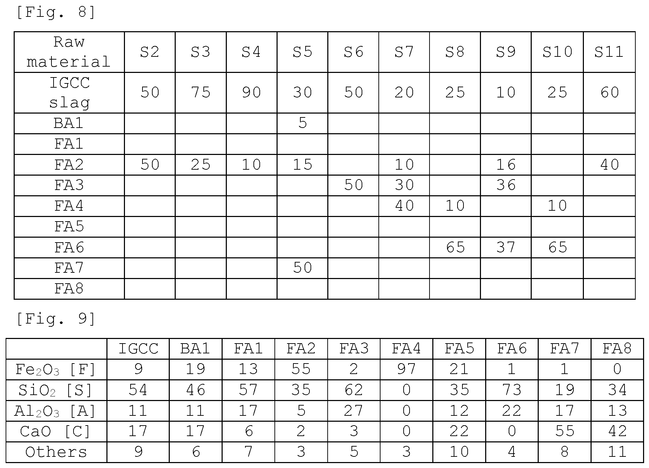

In the present Example Series 2, a mixture obtained by an IGCC waste material, a waste material discharged from a non-IGCC thermal power plant that uses coal as fuel, and basalt at a predetermined mixing ratio (% by mass) was prepared as a raw material of the fiber. The respective mixing ratios of raw materials S2 to S11 will be described below with reference to Fig. 8 (since the numbers after the decimal point are rounded off, the sum may not necessarily add up to 100%). Incidentally, in Fig. 8, the IGCC slag indicates an IGCC waste material, and FA1 to FA8 indicate waste materials from coal-fired power plants that are not IGCC (FA1 to FA8 are waste materials discharged from different power plants). Furthermore, BA1 indicates basalt (basalt). Incidentally, in the present Example Series 2, the components of raw materials S2 to S11 were analyzed by an X-ray fluorescence analysis method. Furthermore, the electric furnace described with reference to Fig. 2 was used for manufacturing fibers from the raw materials S2 to S11.

Raw material S2 was a mixture of an IGCC waste material discharged from an integrated coal gasification combined cycle power plant at a proportion of 50% by mass and a waste material FA2 discharged from a coal-fired power plant at a proportion of 50% by mass.

Raw material S3 was a mixture of an IGCC waste material discharged from an integrated coal gasification combined cycle power plant at a proportion of 75% by mass and a waste material FA2 discharged from the coal-fired power plant at a proportion of 25% by mass.

Raw material S4 was a mixture of an IGCC waste material discharged from an integrated coal gasification combined cycle power plant at a proportion of 90% by mass and a waste material FA2 discharged from the coal-fired power plant at a proportion of 10% by mass.

Raw material S5 was a mixture of an IGCC waste material discharged from an integrated coal gasification combined cycle power plant at a proportion of 30% by mass, basalt at a proportion of 5% by mass, a waste material FA2 discharged from the coal-fired power plant at a proportion of 15% by mass, and a waste material FA7 discharged from a coal-fired power plant at a proportion of 50 by mass.

Raw material S6 was a mixture of an IGCC waste material discharged from an integrated coal gasification combined cycle power plant at a proportion of 50% by mass and a waste material FA3 discharged from a coal-fired power plant at a proportion of 50% by mass.

Raw material S7 is a mixture of an IGCC waste material discharged from an integrated coal gasification combined cycle power plant at a proportion of 20% by mass, a waste material FA2 discharged from the coal-fired power plant at a proportion of 10% by mass, a waste material FA3 discharged from the coal-fired power plant at a proportion of 30% by mass, and a waste material FA4 discharged from a coal-fired power plant at a proportion of 40% by mass.

Raw material S8 is a mixture of an IGCC waste material discharged from an integrated coal gasification combined cycle power plant at a proportion of 25% by mass, a waste material FA4 discharged from the coal-fired power plant at a proportion of 10% by mass, and a waste material FA6 discharged from a coal-fired power plant at a proportion of 65% by mass.

Raw material S9 is a mixture of an IGCC waste material discharged from an integrated coal gasification combined cycle power plant at a proportion of 10% by mass, a waste material FA2 discharged from the coal-fired power plant at a proportion of 16% by mass, a waste material FA3 discharged from the coal-fired power plant at a proportion of 36% by mass, and a waste material FA6 discharged from the coal-fired power plant at a proportion of 37% by mass.

Raw material S10 is a mixture of an IGCC waste material discharged from an integrated coal gasification combined cycle power plant at a proportion of 25% by mass, a waste material FA4 discharged from the coal-fired power plant at a proportion of 10% by mass, and a waste material FA6 discharged from the coal-fired power plant at a proportion of 65% by mass.

Raw material S11 is a mixture of an IGCC waste material discharged from an integrated coal gasification combined cycle power plant at a proportion of 60% by mass and a waste material FA2 discharged from the coal-fired power plant at a proportion of 40% by mass.

Furthermore, in the present Example 2, the components of the waste materials constituting the raw materials S2 to S11 and basalt (waste material or the like) were analyzed by an X-ray fluorescence analysis method. For the analysis, the components of the waste materials and the like were analyzed by using an X-ray fluorescence analyzer (Philips PW2404) of Philips Japan, Ltd., while keeping the sample chamber of the X-ray fluorescence analyzer in a vacuum state. Fig. 9 shows the component compositions of the waste materials and the like according to Example 2. Incidentally, in the following description, 0% by mass means that the amount is so small that the amount cannot be measured, and this does not strictly mean "zero (0)".

In the IGCC waste material discharged from a domestic integrated coal gasification combined cycle power plant, [F] is 9% by mass, [S] is 54% by mass, [A] is 11% by mass, [C] is 17% by mass, and the content of others is 9% by mass.

In the basalt (basalt BA1), [F] is 19% by mass, [S] is 46% by mass, [A] is 11% by mass, [C] is 17% by mass, and the content of others is 6% by mass.

In the waste material FA1 discharged from the domestic coal-fired power plant, [F] is 13% by mass, [S] is 57% by mass, [A] is 17% by mass, [C] is 6% by mass, and the content of others is 7% by mass.

In the waste material FA2 discharged from the domestic coal-fired power plant, [F] is 55% by mass, [S] is 35% by mass, [A] is 5% by mass, [C] is 2% by mass, and the content of others is 3% by mass.

In the waste material FA3 discharged from the domestic coal-fired power plant, [F] is 2% by mass, [S] is 62% by mass, [A] is 27% by mass, [C] is 3% by mass, and the content of others is 5% by mass.

In the waste material FA4 discharged from the domestic coal-fired power plant, [F] is 97% by mass, [S] is 0% by mass, [A] is 0% by mass, [C] is 0% by mass, and the content of others is 3% by mass.

In the waste material FA5 discharged from the domestic coal-fired power plant, [F] is 21% by mass, [S] is 35% by mass, [A] is 12% by mass, [C] is 22% by mass, and the content of others is 10% by mass.

In the waste material FA6 discharged from the domestic coal-fired power plant, [F] is 1% by mass, [S] is 73% by mass, [A] is 22% by mass, [C] is 0% by mass, and the content of others is 4% by mass.

In the waste material FA7 discharged from the domestic coal-fired power plant, [F] is 1% by mass, [S] is 19% by mass, [A] is 17% by mass, [C] is 55% by mass, and the content of others is 8% by mass.

In the waste material FA8 discharged from the domestic coal-fired power plant, [F] is 0% by mass, [S] is 34% by mass, [A] is 13% by mass, [C] is 42% by mass, and the content of others is 11% by mass.

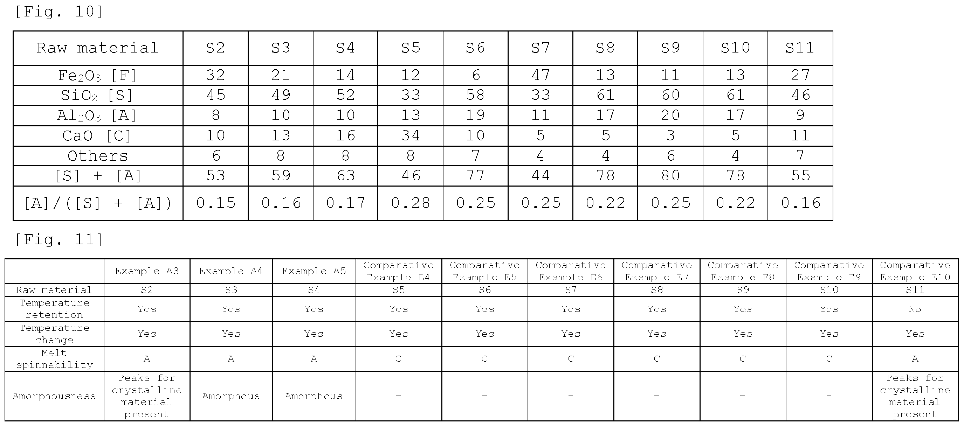

Fig. 10 is a diagram showing the component compositions of the raw materials S2 to S11 according to Example 2. The component compositions shown in Fig. 10 were calculated from the mixing ratio of each of the raw materials S2 to S11 shown in Fig. 8 and the component compositions of the waste materials and the like shown in Fig. 9. Incidentally, since the numbers after the decimal point are rounded off, the sum may not necessarily add up to 100%.

In the raw material S2, [F] is 32% by mass, [S] is 45% by mass, [A] is 8% by mass, [C] is 10% by mass, and the content of others is 6% by mass. Furthermore, [S] + [A] is 53% by mass, and [A]/([S] + [A]) is 0.15.

In the raw material S3, [F] is 21% by mass, [S] is 49% by mass, [A] is 10% by mass, [C] is 13% by mass, and the content of others is 8% by mass. Furthermore, [S] + [A] is 59% by mass, and [A]/([S] + [A]) is 0.16.

In the raw material S4, [F] is 14% by mass, [S] is 52% by mass, [A] is 10% by mass, [C] is 16% by mass, and the content of others is 8% by mass. Furthermore, [S] + [A] is 63% by mass, and [A]/([S] + [A]) is 0.17.

In the raw material S5, [F] is 12% by mass, [S] is 33% by mass, [A] is 13% by mass, [C] is 34% by mass, and the content of others is 8% by mass. Furthermore, [S] + [A] is 46% by mass, and [A]/([S] + [A]) is 0.28.

In the raw material S6, [F] is 6% by mass, [S] is 58% by mass, [A] is 19% by mass, [C] is 10% by mass, and the content of others is 7% by mass. Furthermore, [S] + [A] is 77% by mass, and [A]/([S] + [A]) is 0.25.

In the raw material S7, [F] is 47% by mass, [S] is 33% by mass, [A] is 11% by mass, [C] is 5% by mass, and the content of others is 4% by mass. Furthermore, [S] + [A] is 44% by mass, and [A]/([S] + [A]) is 0.25.

In the raw material S8, [F] is 13% by mass, [S] is 61% by mass, [A] is 17% by mass, [C] is 5% by mass, and the content of others is 4% by mass. Furthermore, [S] + [A] is 78% by mass, and [A]/([S] + [A]) is 0.22.

In the raw material S9, [F] is 11% by mass, [S] is 60% by mass, [A] is 20% by mass, [C] is 3% by mass, and the content of others is 6% by mass. Furthermore, [S] + [A] is 80% by mass, and [A]/([S] + [A]) is 0.25.

In the raw material S10, [F] is 13% by mass, [S] is 61% by mass, [A] is 17% by mass, [C] is 5% by mass, and the content of others is 4% by mass. Furthermore, [S] + [A] is 78% by mass, and [A]/([S] + [A]) is 0.22.

In the raw material S11, [F] is 27% by mass, [S] is 46% by mass, [A] is 9% by mass, [C] is 11% by mass, and the content of others is 7% by mass. Furthermore, [S] + [A] is 55% by mass, and [A]/([S] + [A]) is 0.16.

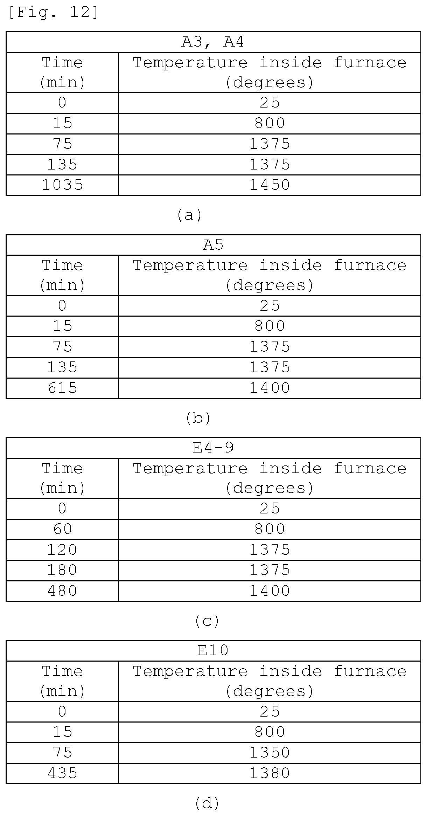

Fig. 11 is a table summarizing the results of the presence or absence of temperature retention (annealing), the presence or absence of temperature change, and melt spinnability for the raw materials S2 to S11. Fig. 12 is a table showing the temperature conditions (changes over time in the temperature inside the furnace) for the raw materials S2 to S11 of Example 2. Here,

Fig. 12(a) is a table showing changes over time in the temperature inside the furnace of Examples A3 and A4.

Fig. 12(b) is a table showing changes over time in the temperature inside the furnace of Comparative Example A5.

Fig. 12(c) is a table showing changes over time in the temperature inside the furnace of Comparative Examples E4 to E9.

Fig. 12(d) is a table showing changes over time in the temperature inside the furnace of Comparative Example E10.

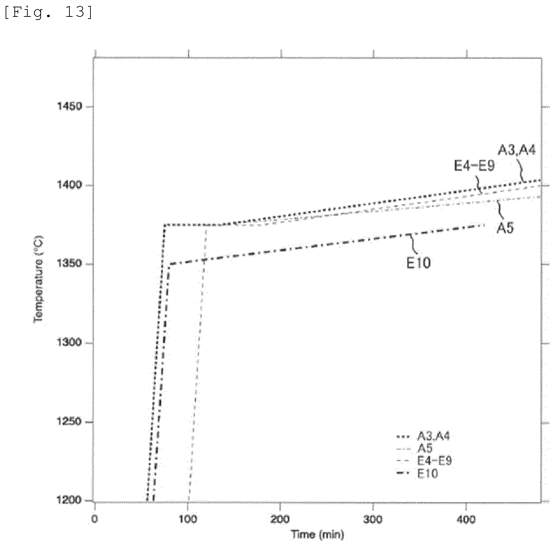

Furthermore, Fig. 13 is a graph obtained by plotting the temperature conditions (changes over time in the temperature inside the furnace) for the raw materials S2 to S11 of Example 2.

(Example A3)

The raw material S2 was placed in the Tammann tube. Next, the temperature inside the furnace was raised from room temperature (25°C) to about 1375°C (raw material temperature 1325°C), and then the raw material S2 was maintained at about 1375°C for one hour (temperature retention: Yes). Subsequently, while the temperature inside the furnace was raised from about 1375°C (raw material temperature 1325°C) to about 1450°C (raw material temperature 1400°C) for 15 hours (temperature change: Yes), the molten material was caused to flow out through the hole provided in the bottom part of the Tammann tube by gravity. The molten material solidified into a spherical form and dropped through the hole provided at the center of the bottom part of the Tammann tube, and as the molten material continuously dropped in the form of fiber, a fiber was produced (melt spinnability: A). Furthermore, the XRD pattern of the fiber obtained from the raw material S2 was examined, and peaks for a crystalline material were recognized (peaks for crystalline material present).

(Example A4)

The raw material S3 was placed in the Tammann tube. Next, the temperature inside the furnace was raised from room temperature (25°C) to about 1375°C (raw material temperature 1325°C), and then the raw material S3 was maintained at about 1375°C for one hour (temperature retention: Yes). Subsequently, while the temperature inside the furnace was raised from about 1375°C (raw material temperature 1325°C) to about 1450°C (raw material temperature 1400°C) for 15 hours (temperature change: Yes), the molten material was caused to flow out through the hole provided in the bottom part of the Tammann tube by gravity. The molten material solidified into a spherical form and dropped through the hole provided at the center of the bottom part of the Tammann tube, and as the molten material continuously dropped in the form of fiber, a fiber was produced (melt spinnability: A). Furthermore, the XRD pattern of the fiber obtained from the raw material S3 was examined, and only the amorphous halo was recognized in the X-ray diffraction (XRD) pattern of the fiber, so that no peak for a crystalline material was recognized (amorphous).

(Example A5)

The raw material S4 was placed in the Tammann tube. Next, the temperature inside the furnace was raised from room temperature (25°C) to about 1375°C (raw material temperature 1325°C), and then the raw material S4 was maintained at about 1375°C for one hour (temperature retention: Yes). Subsequently, while the temperature inside the furnace was raised from about 1375°C (raw material temperature 1325°C) to about 1400°C (raw material temperature 1350°C) for 8 hours (temperature change: Yes), the molten material was caused to flow out through the hole provided in the bottom part of the Tammann tube by gravity. The molten material solidified into a spherical form and dropped through the hole provided at the center of the bottom part of the Tammann tube, and as the molten material continuously dropped in the form of fiber, a fiber was produced (melt spinnability: A). Furthermore, the XRD pattern of the fiber obtained from the raw material S4 was examined, and only the amorphous halo was recognized in the X-ray diffraction (XRD) pattern of the fiber, so that no peak for a crystalline material was recognized (amorphous).

(Comparative Example E4)

The raw material S5 was placed in the Tammann tube. Next, the temperature inside the furnace was raised from room temperature (25°C) to about 1375°C (raw material temperature 1325°C), and then the raw material S5 was maintained at about 1375°C for one hour (temperature retention: Yes). Subsequently, while the temperature inside the furnace was raised from about 1375°C (raw material temperature 1325°C) to about 1400°C (raw material temperature 1350°C) for 5 hours (temperature change: Yes), the molten material was caused to flow out through the hole provided in the bottom part of the Tammann tube by gravity. The molten material solidified into a spherical form and dropped through the hole provided at the center of the bottom part of the Tammann tube; however, the molten material did not drop in the form of fiber, and a fiber was not produced (melt spinnability: C). Incidentally, since a fiber was not obtained, the XRD pattern was not checked.

(Comparative Example E5)

The raw material S6 was placed in the Tammann tube. Next, the temperature inside the furnace was raised from room temperature (25°C) to about 1375°C (raw material temperature 1325°C), and then the raw material S6 was maintained at about 1375°C for one hour (temperature retention: Yes). Subsequently, while the temperature inside the furnace was raised from about 1375°C (raw material temperature 1325°C) to about 1400°C (raw material temperature 1350°C) for 5 hours (temperature change: Yes), the molten material was caused to flow out through the hole provided in the bottom part of the Tammann tube by gravity. The molten material did not drop in the form of fiber through the hole provided at the center of the bottom part of the Tammann tube (melt spinnability: C). Incidentally, since a fiber was not obtained, the XRD pattern was not checked.

(Comparative Example E6)

The raw material S7 was placed in the Tammann tube. Next, the temperature inside the furnace was raised from room temperature (25°C) to about 1375°C (raw material temperature 1325°C), and then the raw material S7 was maintained at about 1375°C for one hour (temperature retention: Yes). Subsequently, while the temperature inside the furnace was raised from about 1375°C (raw material temperature 1325°C) to about 1400°C (raw material temperature 1350°C) for 5 hours (temperature change: Yes), the molten material was caused to flow out through the hole provided in the bottom part of the Tammann tube by gravity. The molten material did not drop in the form of fiber through the hole provided at the center of the bottom part of the Tammann tube (melt spinnability: C). Incidentally, since a fiber was not obtained, the XRD pattern was not checked.

(Comparative Example E7)

The raw material S8 was placed in the Tammann tube. Next, the temperature inside the furnace was raised from room temperature (25°C) to about 1375°C (raw material temperature 1325°C), and then the raw material S8 was maintained at about 1375°C for one hour (temperature retention: Yes). Subsequently, while the temperature inside the furnace was raised from about 1375°C (raw material temperature 1325°C) to about 1400°C (raw material temperature 1350°C) for 5 hours (temperature change: Yes), the molten material was caused to flow out through the hole provided in the bottom part of the Tammann tube by gravity. The molten material did not drop in the form of fiber through the hole provided at the center of the bottom part of the Tammann tube (melt spinnability: C). Incidentally, since a fiber was not obtained, the XRD pattern was not checked.

(Comparative Example E8)

The raw material S9 was placed in the Tammann tube. Next, the temperature inside the furnace was raised from room temperature (25°C) to about 1375°C (raw material temperature 1325°C), and then the raw material S9 was maintained at about 1375°C for one hour (temperature retention: Yes). Subsequently, while the temperature inside the furnace was raised from about 1375°C (raw material temperature 1325°C) to about 1400°C (raw material temperature 1350°C) for 5 hours (temperature change: Yes), the molten material was caused to flow out through the hole provided in the bottom part of the Tammann tube by gravity. The molten material did not drop in the form of fiber through the hole provided at the center of the bottom part of the Tammann tube (melt spinnability: C). Incidentally, since a fiber was not obtained, the XRD pattern was not checked.

(Comparative Example E9)

The raw material S10 was placed in the Tammann tube. Next, the temperature inside the furnace was raised from room temperature (25°C) to about 1375°C (raw material temperature 1325°C), and then the raw material S10 was maintained at about 1375°C for one hour (temperature retention: Yes). Subsequently, while the temperature inside the furnace was raised from about 1375°C (raw material temperature 1325°C) to about 1400°C (raw material temperature 1350°C) for 5 hours (temperature change: Yes), the molten material was caused to flow out through the hole provided in the bottom part of the Tammann tube by gravity. The molten material did not drop in the form of fiber through the hole provided at the center of the bottom part of the Tammann tube (melt spinnability: C). Incidentally, since a fiber was not obtained, the XRD pattern was not checked.

(Comparative Example E10)

The raw material S11 was placed in the Tammann tube. Next, the temperature inside the furnace was raised from room temperature (25°C) to about 800°C (raw material temperature 750°C) for about 20 minutes, and then by changing the temperature increase rate, the temperature inside the furnace was raised from about 800°C (raw material temperature 750°C) to about 1350°C (raw material temperature 1300°C) for about 60 minutes. Subsequently, while the temperature inside the furnace was further raised, by changing the temperature increase rate, from about 1350°C (raw material temperature 1300°C) to about 1375°C (raw material temperature 1325°C) for about 340 minutes (temperature change: Yes), the molten material was caused to flow out through the hole provided in the bottom part of the Tammann tube by gravity (melt spinnability: A, temperature retention: No). Furthermore, the XRD pattern of the fiber obtained from the raw material S11 was examined, and peaks for a crystalline material were recognized (peaks for crystalline material present).

(Discussion)

From the results of Example Series 2, it was found that a fiber can be manufactured from a raw material including an IGCC waste material discharged by integrated coal gasification combined cycle (IGCC). More specifically, it was found that a fiber can be manufactured from a raw material including at least one of basalt and a waste material discharged from a non-IGCC thermal power plant that uses coal as fuel, in addition to an IGCC waste material.

Furthermore, from the results of Example 2, it was understood that the total content of $SiO_2$ and $Al_2O_3$ in the raw material of the fiber is preferably 40% by mass or more and 70% by mass or less. Furthermore, it was understood that in the raw material of the fiber, the proportion of $Al_2O_3$ in the sum of $SiO_2$ and $Al_2O_3$ ([A]/([A] + [S])) (mass ratio) is preferably in the range of 0.15 to 0.40. Furthermore, it was understood that in the raw material of the fiber, the content of CaO is preferably 5% by mass or more and 30% by mass or less.

Although it is not an essential configuration of the invention, the fiber has almost no decrease in strength caused by separation at the crystalline phase/non-crystalline phase interface, and in order to obtain a fiber having high strength, it is preferable that the fiber is substantially composed only of an amorphous phase.

INDUSTRIAL APPLICABILITY

A fiber obtained from a raw material including an IGCC waste material can be processed into roving, chopped strands, woven fabrics, nonwoven fabrics, and the like and used as coating materials or reinforcing materials.

EXPLANATIONS OF LETTERS OR NUMERALS

1    ELECTRIC FURNACE
2    TAMMANN TUBE

3 SUSPENSION ROD
4 OPENING
5 FIBER
D OUTER DIAMETER OF ELECTRIC FURNACE
H HEIGHT OF ELECTRIC FURNACE
d INNER DIAMETER OF OPENING OF ELECTRIC FURNACE

**Claims**

1. A fiber comprising a waste material discharged from integrated coal gasification combined cycle (IGCC) as a raw material.

2. The fiber according to claim 1, wherein the fiber includes at least one of basalt and a waste material discharged from a thermal power plant using coal as fuel, as the raw material.

3. The fiber according to claim 1, wherein the fiber includes only a waste material discharged from integrated coal gasification combined cycle (IGCC) as the raw material.

4. The fiber according to claim 1, wherein

   the fiber is a fiber including $SiO_2$, $Al_2O_3$, and CaO as components,
   a total content of $SiO_2$ and $Al_2O_3$ in the fiber is 40% by mass or more and 70% by mass or less,
   $Al_2O_3/(SiO_2 + Al_2O_3)$ (mass ratio) is in the range of 0.15 to 0.40, and
   a content of CaO is 5% by mass or more and 30% by mass.

5. The fiber according to claim 1, wherein the fiber is substantially composed only of an amorphous material.

6. The fiber according to claim 1, wherein the fiber has an outer diameter of 500 $\mu$m or less.

7. A fiber manufacturing method, comprising:

   a step of heating a raw material including a waste material discharged from integrated coal gasification combined cycle (IGCC) up to 1300 degrees or higher;
   a step of maintaining the raw material at a temperature of 1300 degrees or higher for a predetermined time; and
   a step of causing the raw material after being maintained for the predetermined time to flow out through a formed hole and forming the raw material in the form of fiber.

8. The fiber manufacturing method according to claim 7, wherein the predetermined time is 50 minutes or longer.

9. The fiber manufacturing method according to claim 7, wherein the raw material is caused to flow out through the formed hole while changing the temperature of the raw material.

10. The fiber manufacturing method according to claim 9, wherein the raw material is caused to flow out through the formed hole while increasing the temperature of the raw material.

[Fig. 1]

|  | IGCC |
|---|---|
| $Fe_2O_3$ | 9.05 |
| $SiO_2$ | 53.6 |
| $Al_2O_3$ | 14.53 |
| CaO | 17.24 |
| Others | 5.58 |

[Fig. 2]

[Fig. 3]

| | Raw material | Temperature retention | Temperature change | Melt spinnability |
|---|---|---|---|---|
| Example A1 | S1 | Yes | Yes | A |
| Example A2 | S1 | Yes | Yes | A |
| Comparative Example E1 | S1 | Yes | No | C |
| Comparative Example E2 | S1 | No | Yes | B |

| Comparative Example E3 | S1 | Yes | No | C |
|---|---|---|---|---|

[Fig. 4]

| A1 | |
|---|---|
| Time (min) | Temperature inside furnace (degrees) |
| 0 | 25 |
| 60 | 1350 |
| 100 | 1350 |
| 115 | 1400 |
| 135 | 1400 |
| 150 | 1450 |
| 154 | 1450 |

(a)

| A2 | |
|---|---|
| Time (min) | Temperature inside furnace (degrees) |
| 0 | 25 |
| 60 | 1375 |
| 150 | 1375 |
| 180 | 1380 |
| 191 | 1380 |

(b)

| E1 | |
|---|---|
| Time (min) | Temperature inside furnace (degrees) |
| 0 | 25 |
| 60 | 1350 |
| 154 | 1350 |

(c)

| E2 | |
|---|---|
| Time (min) | Temperature inside furnace (degrees) |
| 0 | 25 |
| 60 | 1400 |
| 75 | 1417 |
| 90 | 1422 |
| 105 | 1422 |

(d)

| E3 | |
|---|---|
| Time (min) | Temperature inside furnace (degrees) |
| 0 | 25 |
| 100 | 1320 |

| 120 | 1320 |
|---|---|

(e)

[Fig. 5]

[Fig. 6]

[Fig. 7]

[Fig. 8]

| Raw material | S2 | S3 | S4 | S5 | S6 | S7 | S8 | S9 | S10 | S11 |
|---|---|---|---|---|---|---|---|---|---|---|
| IGCC slag | 50 | 75 | 90 | 30 | 50 | 20 | 25 | 10 | 25 | 60 |
| BA1 | | | | 5 | | | | | | |
| FA1 | | | | | | | | | | |
| FA2 | 50 | 25 | 10 | 15 | | 10 | | 16 | | 40 |
| FA3 | | | | | 50 | 30 | | 36 | | |
| FA4 | | | | | | 40 | 10 | | 10 | |
| FA5 | | | | | | | | | | |
| FA6 | | | | | | | 65 | 37 | 65 | |
| FA7 | | | | 50 | | | | | | |
| FA8 | | | | | | | | | | |

[Fig. 9]

| | IGCC | BA1 | FA1 | FA2 | FA3 | FA4 | FA5 | FA6 | FA7 | FA8 |
|---|---|---|---|---|---|---|---|---|---|---|
| $Fe_2O_3$ [F] | 9 | 19 | 13 | 55 | 2 | 97 | 21 | 1 | 1 | 0 |
| $SiO_2$ [S] | 54 | 46 | 57 | 35 | 62 | 0 | 35 | 73 | 19 | 34 |
| $Al_2O_3$ [A] | 11 | 11 | 17 | 5 | 27 | 0 | 12 | 22 | 17 | 13 |
| CaO [C] | 17 | 17 | 6 | 2 | 3 | 0 | 22 | 0 | 55 | 42 |
| Others | 9 | 6 | 7 | 3 | 5 | 3 | 10 | 4 | 8 | 11 |

[Fig. 10]

| Raw material | S2 | S3 | S4 | S5 | S6 | S7 | S8 | S9 | S10 | S11 |
|---|---|---|---|---|---|---|---|---|---|---|
| $Fe_2O_3$ [F] | 32 | 21 | 14 | 12 | 6 | 47 | 13 | 11 | 13 | 27 |
| $SiO_2$ [S] | 45 | 49 | 52 | 33 | 58 | 33 | 61 | 60 | 61 | 46 |
| $Al_2O_3$ [A] | 8 | 10 | 10 | 13 | 19 | 11 | 17 | 20 | 17 | 9 |
| CaO [C] | 10 | 13 | 16 | 34 | 10 | 5 | 5 | 3 | 5 | 11 |
| Others | 6 | 8 | 8 | 8 | 7 | 4 | 4 | 6 | 4 | 7 |
| [S] + [A] | 53 | 59 | 63 | 46 | 77 | 44 | 78 | 80 | 78 | 55 |
| [A]/([S] + [A]) | 0.15 | 0.16 | 0.17 | 0.28 | 0.25 | 0.25 | 0.22 | 0.25 | 0.22 | 0.16 |

[Fig. 11]

| | Example A3 | Example A4 | Example A5 | Comparative Example E4 | Comparative Example E5 | Comparative Example E6 | Comparative Example E7 | Comparative Example E8 | Comparative Example E9 | Comparative Example E10 |
|---|---|---|---|---|---|---|---|---|---|---|
| Raw material | S2 | S3 | S4 | S5 | S6 | S7 | S8 | S9 | S10 | S11 |
| Temperature retention | Yes | Yes | Yes | Yes | Yes | Yes | Yes | Yes | Yes | No |
| Temperature change | Yes | Yes | Yes | Yes | Yes | Yes | Yes | Yes | Yes | Yes |
| Melt spinnability | A | A | A | C | C | C | C | C | C | A |
| Amorphousness | Peaks for crystalline material present | Amorphous | Amorphous | - | - | - | - | - | - | Peaks for crystalline material present |

[Fig. 12]

| A3, A4 | |
|---|---|
| Time (min) | Temperature inside furnace (degrees) |
| 0 | 25 |
| 15 | 800 |
| 75 | 1375 |
| 135 | 1375 |
| 1035 | 1450 |

(a)

| A5 | |
|---|---|
| Time (min) | Temperature inside furnace (degrees) |
| 0 | 25 |
| 15 | 800 |
| 75 | 1375 |
| 135 | 1375 |
| 615 | 1400 |

(b)

| E4-9 | |
|---|---|
| Time (min) | Temperature inside furnace (degrees) |
| 0 | 25 |
| 60 | 800 |
| 120 | 1375 |
| 180 | 1375 |
| 480 | 1400 |

(c)

| E10 | |
|---|---|
| Time (min) | Temperature inside furnace (degrees) |
| 0 | 25 |
| 15 | 800 |
| 75 | 1350 |
| 435 | 1380 |

(d)

[Fig. 13]

**INTERNATIONAL SEARCH REPORT**

International application No.

PCT/JP2021/011047

A.    CLASSIFICATION OF SUBJECT MATTER

D01F 9/08(2006.01)i
FI: D01F9/08 A; D01F9/08 C

According to International Patent Classification (IPC) or to both national classification and IPC

B.    FIELDS SEARCHED

Minimum documentation searched (classification system followed by classification symbols)

D01F9/08

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-124253 A (CENTRAL RESEARCH INSTITUTE OF ELECTRIC POWER INDUSTRY) 18 May 2006 (2006-05-18) claim 1, paragraphs [0002], [0026], table 1 | 1-8<br>1-8<br>9-10 |
| Y<br>A | JP 2008-266038 A (CENTRAL RESEARCH INSTITUTE OF ELECTRIC POWER INDUSTRY) 06 November 2008 (2008-11-06) claims, paragraphs [0001], [0039], examples | 1-8<br>9-10 |
| A | JP 6-316815 A (SANSOU CO., LTD.) 15 November 1994 (1994-11-15) | 1-10 |
| A | CN 107459255 A (JIANGSU TIANNUO ROAD MATERIAL TECHNOLOGY CO., LTD.) 12 December 2017 (2017-12-12) | 1-10 |
| P, A | WO 2020/218356 A1 (NIPPON FIBER CORPORATION KK) 29 October 2020 (2020-10-29) | 1-10 |

☐   Further documents are listed in the continuation of Box C.        ☒   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>18 May 2021 (18.05.2021) | Date of mailing of the international search report<br>01 June 2021 (01.06.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## INTERNATIONAL SEARCH REPORT
Information on patent family members

| International application No. |
| --- |
| PCT/JP2021/011047 |

| Patent Documents referred in the Report | Publication Date | Patent Family | Publication Date |
| --- | --- | --- | --- |
| JP 2006-124253 A | 18 May 2006 | (Family: none) | |
| JP 2008-266038 A | 06 Nov. 2008 | (Family: none) | |
| JP 6-316815 A | 15 Nov. 1994 | (Family: none) | |
| CN 107459255 A | 12 Dec. 2017 | (Family: none) | |
| WO 2020/218356 A1 | 29 Oct. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017014052 A